# EUROPÄISCHE PATENTSCHRIFT

(11) **EP 2 718 156 B1**
(45) Veröffentlichungstag und Bekanntmachung des Hinweises auf die Patenterteilung: **03.02.2016**
(21) Anmeldenummer: 12728389.3
(22) Anmeldetag: 31.05.2012
(51) Int. Cl.: B60R 22/03

(54) **BAUGRUPPE MIT EINEM GURTHÖHENVERSTELLER UND EINEM GURTBRINGER**
ASSEMBLY WITH A SEAT BELT HEIGHT ADJUSTER AND A SEAT BELT PRESENTER
MODULE COMPRENANT UN DISPOSITIF DE RÉGLAGE EN HAUTEUR DE CEINTURE ET UN APPROCHE-CEINTURE

(30) Priorität: 08.06.2011 DE 102011105026
(43) Veröffentlichungstag der Anmeldung: 16.04.2014
(73) Patentinhaber: TRW Automotive GmbH, 73553 Alfdorf (DE)
(72) Erfinder: BIRK, Karl, 73061 Ebersbach (DE); SEYFFERT, Martin, 72793 Pfullingen (DE)
(74) Vertreter: Prehn, Manfred
(86) Internationale Anmeldenummer: PCT/EP2012/002301
(87) Internationale Veröffentlichungsnummer: WO 2012/167883

(56) Entgegenhaltungen:
- DE-A1- 3 537 519
- DE-A1- 3 633 902
- DE-A1- 3 909 364
- DE-C1- 19 602 021
- FR-A1- 2 856 024

## Beschreibung

Die Erfindung betrifft eine Baugruppe mit einem Gurthöhenversteller und einem Gurtbringer zum Anreichen eines Gurtbands eines Sicherheitsgurts.

Gurtbringer werden bisher vor allem in Cabrios eingesetzt, um beim Einsteigen den Sicherheitsgurt leichter erreichbar zu machen. Bei zweitürigen Fahrzeugen lässt sich ein Gurtbringer einfach an der B-Säule montieren. Bei viertürigen Fahrzeugen besteht jedoch das Problem, dass die B-Säule sehr schmal ausgeführt ist.

Die DE 196 02 021 C1, Figur 1, zeigt eine Baugruppe mit einem Arm 8 als Gurthöhenversteller für den oberen Umlenkpunkt des Gurtes 3. Der Arm dient gleichzeitig als Gurtbringer zum Anreichen eines Gurtbandes 3 und weist hierzu eine Helix 10 auf, mittels der die eingeleitete Drehbewegung mit einer Linearbewegung überlagert ist und dadurch beides bewirkt, die Höhenverstellung und ein Drehbewegung zur Anreichen des Gurtes. Der Arm 8 ist mittels eines Antriebs 16 aus einer Normalposition in eine Anreichposition verfahrbar.

Aufgabe der Erfindung ist es, eine kompakte Konstruktion für einen Gurtbringer zu schaffen.

Erfindungsgemäß wird hierzu eine Baugruppe mit einem Gurthöhenversteller und einem Gurtbringer zum Anreichen eines Gurtbands eingesetzt, wobei der Gurtbringer einen Arm aufweist, der mittels eines Antriebs aus einer Normalposition in eine Anreichposition verfahrbar, insbesondere verschwenkbar ist, und wobei der Arm am Gurthöhenversteller angeordnet ist. Der Platzbedarf für den Gurtbringer wird auf diese Weise deutlich reduziert, und das geringe Platzangebot beispielsweise an einer B-Säule kann optimal ausgenutzt werden. Zusätzlich ist nach der Erfindung vorgesehen, daß der Gurthöhenversteller einen längsverschieblichen Schlitten und einen daran befestigten Umlenkbeschlag aufweist.

Vorteilhaft ist der Arm an einem Anlenkpunkt eines Umlenkbeschlags für den Sicherheitsgurt befestigt. Diese Kombination bewirkt eine weitere Platzersparnis.

Der Antrieb für die Bewegung des Arms kann am Gurthöhenversteller angeordnet sein, sodass er zusammen mit diesem bewegt wird.

Es ist auch möglich, den Antrieb separat vom Gurthöhenversteller am Fahrzeug, insbesondere an der B-Säule, anzubringen und die Kraft zur Bewegung des Arms zu übertragen. Damit kann der Antrieb zum Beispiel bodennah angeordnet und über ein hinter der Säulenverkleidung liegendes Kraftübertragungsglied den Arm bewegen.

Vorzugsweise ist wenigstens ein Kraftübertragungsglied, das insbesondere zug- oder drucksteif gestaltet ist, vorgesehen, welches die Bewegung zwischen dem Antrieb und dem Arm überträgt. Wenn der Antrieb nicht am Gurthöhenversteller angeordnet ist, muss das Kraftübertragungsglied so gestaltet sein, dass es eine Distanzveränderung zwischen dem Gurthöhenversteller und dem Antrieb bei Verstellen der Gurthöhe ausgleicht.

Insbesondere wenn der Antrieb am Gurthöhenversteller angeordnet ist, ist vorteilhaft auch das Kraftübertragungsglied am Gurthöhenversteller angebracht.

Das Kraftübertragungsglied kann beispielsweise ein Bowdenzug, eine Zugstange oder eine Koppelstange sein.

Bei der Verwendung einer Zugstange ist vorteilhaft ein Spindelantrieb zur Bewegung der Zugstange vorgesehen, wobei der Spindelantrieb aber auch bei anders ausgebildeten Kraftübertragungsgliedern einsetzbar ist.

Der Antrieb zur Bewegung der Zugstange ist bevorzugt separat vom Gurthöhenversteller stationär an der B-Säule angeordnet. Eine Kopplung zwischen der Zugstange und dem Antrieb erfolgt vorzugsweise nur, wenn der Antrieb läuft, um eine Höhenverstellung des Gurthöhenverstellers ausgleichen zu können.

Bei der Verwendung einer Koppelstange ist diese vorteilhaft mit einem Exzenter verbunden, der am Gurthöhenversteller angeordnet ist.

Es ist auch möglich, ein Getriebe oder ein Schneckenrad vorzusehen, das die Bewegung zwischen dem Antrieb und dem Arm überträgt, wobei insbesondere das Getriebe oder das Schneckenrad am Gurthöhenversteller angebracht ist. In diesem Fall kann die Baugruppe sehr kompakt gestaltet werden.

Vorzugsweise ist der Arm permanent mit dem Gurtband verbunden, beispielsweise in Form einer Öse, sodass bei Verfahren oder Verschwenken des Arms das Gurtband automatisch mittransportiert wird. Eine weitere Mechanik zum Erfassen des Gurtbands ist somit nicht notwendig, was die Kompaktheit der Baugruppe erhöht.

Der Gurtbringer wird nach dem Anlegen des Gurtes wieder in seine Ausgangsposition zurückbewegt.

Insbesondere ist der Umlenkbeschlag fest am Höhenversteller befestigt, und das Gurtband verläuft vom Beschlag zum Gurtbringer. Der die Kraft des Gurtbandes aufnehmende Umlenkbeschlag ist folglich nicht am Gurtbringer angebracht, sondern am Höhenversteller.

Die Erfindung wird im Folgenden anhand mehrerer Ausführungsformen und mit Bezug auf die beigefügten Zeichnungen näher erläutert: In den Zeichnungen zeigen:
- Figur 1 eine schematische Ansicht einer erfindungsgemäßen Baugruppe gemäß einer ersten Ausführungsform;
- Figur 2 eine schematische Ansicht einer erfindungsgemäßen Baugruppe in einer Variante der ersten Ausführungsform;
- Figur 3 eine Seitenansicht der Baugruppe aus Figur 1;
- Figur 4 eine schematische Ansicht einer erfindungsgemäßen Baugruppe in einer zweiten Ausführungsform;
- Figur 5 eine Seitenansicht der Baugruppe aus Figur 4;
- Figur 6 eine Detailansicht eines Antriebs für die Baugruppe aus Figur 4;
- Figur 7 eine schematische Ansicht einer erfindungsgemäßen Baugruppe gemäß einer dritten Ausführungsform;
- Figur 8 eine schematische Seitenansicht der Baugruppe aus Figur 7;
- Figur 9 eine schematische Ansicht einer erfindungsgemäßen Baugruppe gemäß einer vierten Ausführungsform;
- Figur 10 eine schematische Seitenansicht der Baugruppe aus Figur 9;
- Figur 11 eine schematische Ansicht einer erfindungsgemäßen Baugruppe gemäß einer Variante der in Figur 9 dargestellten Baugruppe;
- Figur 12 eine schematische Ansicht einer erfindungsgemäßen Baugruppe gemäß einer fünften Ausführungsform; und
- Figur 13 eine schematische Seitenansicht der Baugruppe aus Figur 12.

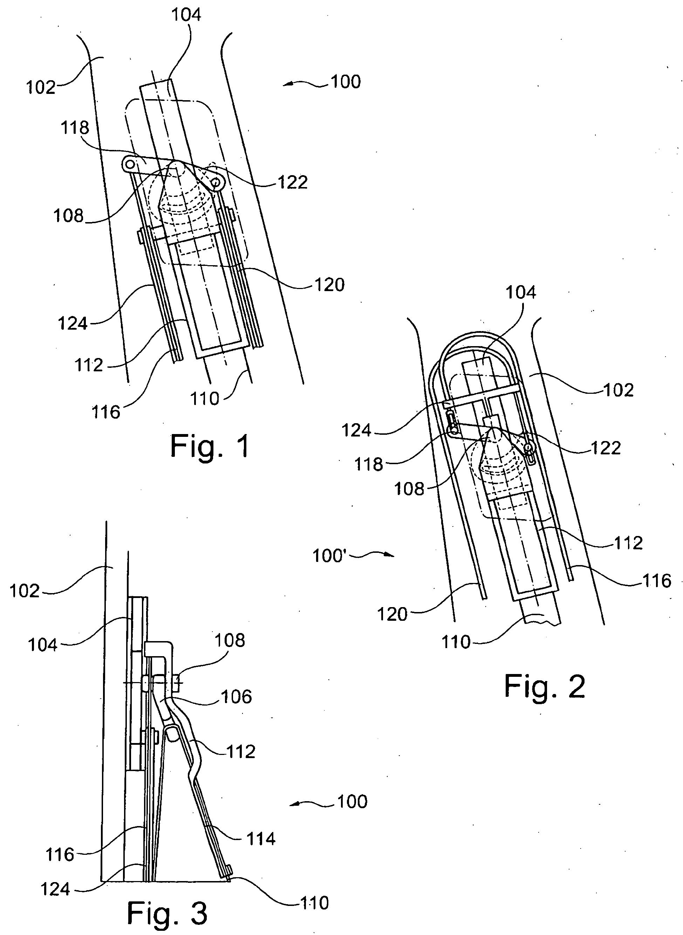

Figur 1 zeigt eine Baugruppe 100 in einer ersten Ausführungsform. An einer B-Säule 102 eines Personenkraftwagens ist ein Gurthöhenversteller 104 (hier nur schematisch gezeigt) angeordnet, mit einem in Längsrichtung verschieblichen Schlitten, an dem ein Umlenkbeschlag 106 (siehe Figur 3) an einem Anlenkpunkt 108 befestigt ist. Durch den Umlenkbeschlag 106 verläuft das Gurtband 110 eines Sicherheitsgurtes.

Ein Arm 112 eines Gurtbringers ist schwenkbar am Anlenkpunkt 108 befestigt. Der Arm 112 weist eine mit einer Öse versehene Auflageplatte 114 auf, wobei das Gurtband 110 durch die Öse verläuft, sodass der Arm 112 permanent mit dem Gurtband 110 verbunden ist.

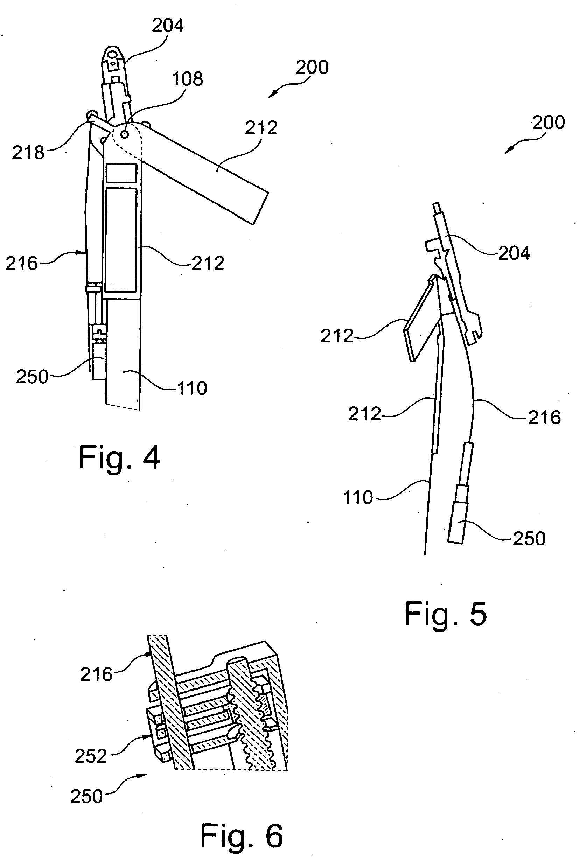

In einer Normalposition ist der Arm 112 wie in den Figuren 1 bis 3 dargestellt parallel zur B-Säule 102 und zum Gurtbandverlauf ausgerichtet. Beim Einsteigen eines Fahrzeuginsassen verschwenkt der Arm 112 zur Seite in eine Anreichposition, sodass das Gurtband 110 vom Fahrzeuginsassen leichter gegriffen werden kann. Diese Verschwenkung ist für die zweite Ausführungsform in den Figuren 4 und 5 dargestellt.

Die Kraft für die Verschwenkung des Arms 112 wird von einem hier nicht gezeigten, an der B-Säule 102 fest angebrachten Antrieb über ein Kraftübertragungsglied 116 an einen fest mit dem Arm 112 verbundenen, seitlich ausragenden Hebelarm 118 übertragen.

Das Kraftübertragungsglied 116 ist im hier dargestellten Fall ein Bowdenzug.

Der Vorteil eines flexiblen, aber zug- und drucksteifen Kraftübertragungsglieds wie einem Bowdenzug liegt darin, dass der wechselnde Abstand zwischen dem fest installierten Antrieb und dem Arm 112 bei Betätigung des Gurthöhenverstellers 104, bei der der Umlenkbeschlag 106 und damit auch der Anlenkpunkt 108 entlang der B-Säule 102 verschoben werden, problemlos ausgeglichen werden kann.

Im Beispiel der Figur 1 ist zur Rückstellung des Arms 112 ein zweites Kraftübertragungsglied 120, hier auch in Form eines Bowdenzugs, vorgesehen, das an einem zweiten, seitlich vom Arm 112 abstehenden Hebelarm 122 angreift. Das zweite Kraftübertragungsglied 120 ist ebenfalls mit dem Antrieb verbunden (hier nicht dargestellt). Es wäre auch möglich, die Rückstellung über Schwerkrafteinwirkung oder eine Feder oder einen reversibel verfahrbaren Antrieb zu realisieren.

Die gesamte Baugruppe mit Ausnahme des Arms 112 sowie des Umlenkbeschlags 106 ist normalerweise unter einer Verkleidung der B-Säule 102 verborgen.

Anstatt einer einfachen Verschwenkung könnte auch eine dreidimensionale Anreichbewegung des Arms 112 erreicht werden, indem eine Kulissenführung eingesetzt wird (nicht dargestellt).

Wenn der Arm 112 vom Gurtband 110 nach dem Anlegen entkoppelt wird, indem der Arm 112 eine offene Halterung für das Gurtband 110 besitzt, wird der Arm 112 nach dem Anlegen des Gurtbands 110 zurückbewegt. Ansonsten bleibt der Arm 112 in der Anreichposition, die bereits an den Gurtverlauf angepasst ist.

Der Arm ist insbesondere aus flexiblem Kunststoffmaterial.

Generell gilt, dass die Merkmale der einzelnen beschriebenen Ausführungsformen im Ermessen des Fachmanns untereinander austauschbar oder miteinander kombinierbar sind.

Figur 2 zeigt eine Variante der gerade beschriebenen Ausführungsform, bei der die beiden Kraftübertragungsglieder 116, 120 von oben an den Hebelarmen 118, 122 angreifen und im Bogen um den Gurthöhenversteller 104 geführt sind. Durch diese Gestaltung wird ein Teil der zum Ausgleich der Verschiebebewegung des Gurthöhenverstellers 104 benötigten Länge des Kraftübertragungsglieds 116 bereitgestellt.

Am Gurthöhenversteller 104 ist in beiden Fällen eine Führung 124 für einen Abschnitt des Kraftübertragungsglieds 116, 120 angeordnet, an dem das Ende des äußeren Rohres des Bowdenzugs befestigt ist.

In den Figuren 4 bis 6 ist eine zweite Ausführungsform einer Baugruppe 200 aus einem Gurthöhenversteller 204 und einem Gurtbringer dargestellt. Der Arm 212 des Gurtbringers ist hier sowohl in der Normalstellung als auch in der Anreichposition dargestellt.

Der Hebelarm 218 des Arms 212 ist in diesem Fall mit einem Kraftübertragungsglied 216 in Form einer Zugstange verbunden, die von einem fest an der B-Säule installierten Spindelantrieb 250 bewegt werden kann. Der Spindelantrieb 250 weist hierzu eine Spindelmutter mit einer Mitnehmerlasche 252 auf, die eine Durchgangsöffnung hat, durch die sich die Zugstange erstreckt. Die Durchgangsöffnung ist klar größer als die Zugstange. Bei Betätigung des Spindelantriebs 250 verkippt die Mitnehmerlasche und verkantet sich an der Zugstange.

Bei Betätigung des Spindelantriebs 250 wird die Zugstange daher in beide Richtungen mitgenommen. In der Normalstellung des Arms 212 bei unbetätigtem Antrieb 250 steht die Mitnehmerlasche 252 dagegen so zur Zugstangenachse, sodass sich die Zugstange bei Verstellung des Gurthöhenverstellers 204 ungehindert relativ zum Spindelantrieb 250 verschieben kann, was durch die übergroße Durchgangsöffnung ermöglicht wird.

Es sind natürlich auch andere Mechanismen zum Mitnehmen der Zugstange denkbar, beispielsweise könnten zwei konische, federbelastete Hülsen verwendet werden, die bei einer Betätigung des Spindelantriebs die Zugstange klemmen.

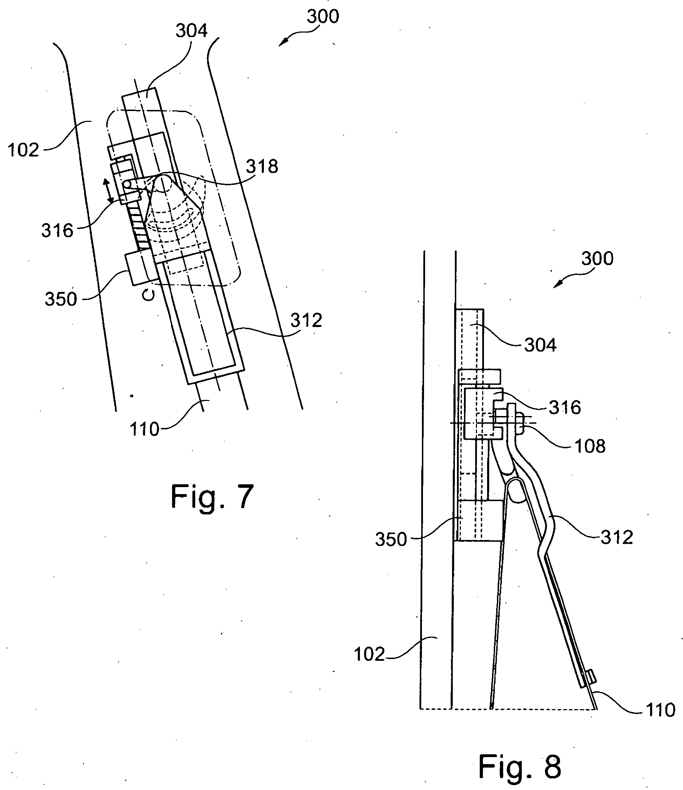

Bei der in den Figuren 7 und 8 gezeigten dritten Ausführungsform einer Baugruppe 300 ist ein Spindelantrieb 350 direkt am Gurthöhenversteller 304 angeordnet. Der Hebelarm 318 ist direkt mit der Spindelmutter 316 verbunden, sodass bei einer Linearbewegung der Spindelmutter 352 der Arm 312 zur Seite in die Anreichposition verschwenkt wird.

Bei der Betätigung des Gurthöhenverstellers 304 wird der Spindelantrieb 350 mitbewegt, da er fest mit diesem verbunden ist.

Der Spindelantrieb 350 kann auch stationär an der Fahrzeugkarosserie, z. B. an der B-Säule, befestigt sein. Die Verbindung zwischen der Spindel und dem Spindelantrieb kann dann beispielsweise über eine flexible Welle erfolgen. Alternativ kann statt Spindel und flexibler Welle auch ein an sich bekanntes Steigungskabel, also ein flexibles Spindelelement, verwendet werden, das die Drehbewegung des Spindelantriebes auf die Spindelmutter überträgt.

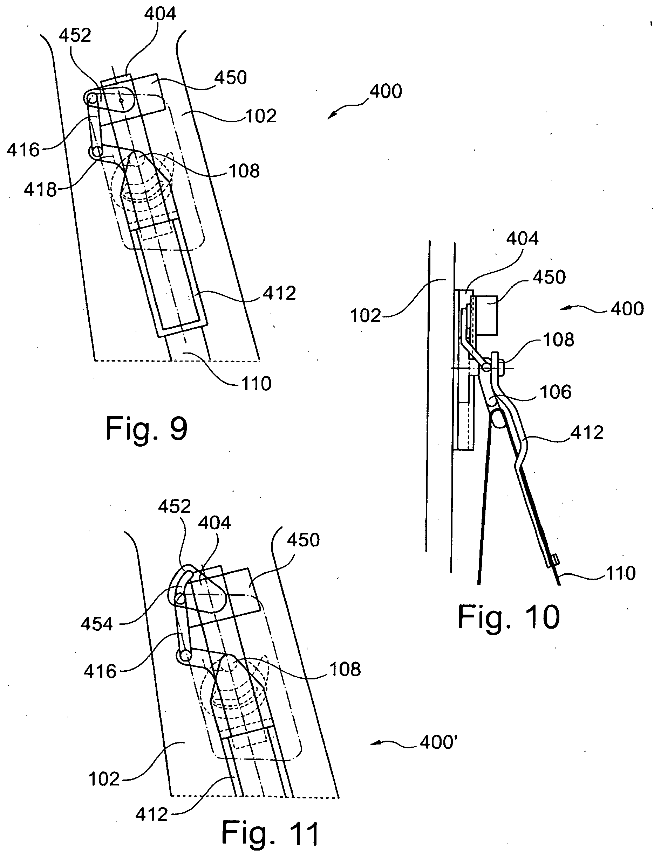

Bei der in den Figuren 9 bis 11 dargestellten vierten Ausführungsform einer Baugruppe 400 ist ein Antrieb 450 in Form eines Elektromotors direkt am Gurthöhenversteller 404 befestigt.

Ein Kraftübertragungsglied 416 in Form einer Koppelstange verbindet einen Exzenter 452 an der Welle des Antriebs 450 mit dem Hebelarm 418 des Arms 412 des Gurtbringers.

Figur 11 zeigt eine Variante, in der der Exzenter 452 eine Kulissenführung 454 aufweist. Die Kulissenführung 454 kann beliebig komplex gestaltet sein, sodass der Arm 412 eine komplexe Anreichbewegung ausführen kann.

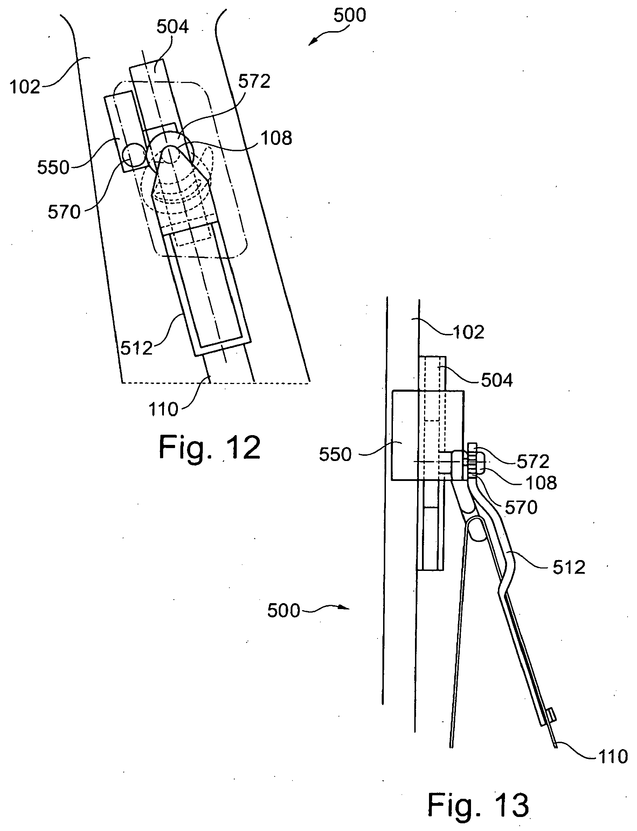

In den Figuren 12 und 13 ist eine fünfte Ausführungsform einer Baugruppe 500 gezeigt, bei der ein Antrieb 550 in Form eines Elektromotors am Gurthöhenversteller 504 angebracht ist und direkt mit dem Arm 512 des Gurtbringers in Verbindung steht. Der Motor kann direkt ein Schneckenrad 570 antreiben, das ein Verschwenken des Arms 512, der an einem oberen Ende 572 eine geeignete Zahnung aufweist, zur Folge hat. Es kann auch zwischen dem Antrieb 550 und dem oberen Ende 572 des Arms 512 mit der Zahnung ein Übersetzungsgetriebe vorgesehen sein.

Sowohl der Auslenkweg als auch die Auslenkgeschwindigkeiten in den einzelnen Phasen der Gurtanreichung werden in dieser Ausführungsform direkt durch die Ansteuerung des Antriebs 550 vorgegeben.

## Patentansprüche

1. Baugruppe mit einem Gurthöhenversteller (104 - 504) und einem Gurtbringer zum Anreichen eines Gurtbands (110),
wobei der Gurthöhenversteller einen längsverschieblichen Schlitten und einen daran befestigten Umlenkbeschlag (106) aufweist, und
wobei der Gurtbringer einen Arm (112 - 512) aufweist, der mittels eines Antriebs (250 - 550) aus einer, Normalposition in eine Anreichposition verfahrbar, insbesondere verschwenkbar, ist und der Arm (112 - 512) am Gurthöhenversteller (104 - 504) angeordnet ist.

2. Baugruppe nach Anspruch 1, **dadurch gekennzeichnet, dass** der Arm (112 - 512) an einem Anlenkpunkt (108) des Umlenkbeschlags (106) befestigt ist.

3. Baugruppe nach einem der vorhergehenden Ansprüche, **dadurch gekennzeichnet, dass** der Antrieb (350; 450; 550) für die Bewegung des Arms (112 - 512) am Gurthöhenversteller (104 - 504) angeordnet ist.

4. Baugruppe nach einem der vorhergehenden Ansprüche, **dadurch gekennzeichnet, dass** wenigstens ein Kraftübertragungsglied (116; 120; 216; 316), insbesondere ein zug- oder drucksteifes Kraftübertragungsglied (116; 120; 216; 316), vorgesehen ist, das die Bewegung vom Antrieb (250 - 550) auf den Arm (112 - 512) überträgt.

5. Baugruppe nach Anspruch 4, **dadurch gekennzeichnet, dass** das Kraftübertragungsglied (116; 120; 216; 316) am Gurthöhenversteller (104 - 504) angebracht ist.

6. Baugruppe nach einem der Ansprüche 4 und 5, **dadurch gekennzeichnet, dass** das Kraftübertragungsglied (116; 120; 216; 316) ein Bowdenzug, eine Zugstange oder eine Koppelstange ist.

7. Baugruppe nach Anspruch 6, **dadurch gekennzeichnet, dass** zur Bewegung des Zugübertragungsglieds ein Spindelantrieb (250) vorgesehen ist.

8. Baugruppe nach Anspruch 6, **dadurch gekennzeichnet, dass** die Koppelstange mit einem Exzenter (462) verbunden ist, der am Gurthöhenversteiler (404) angeordnet ist.

9. Baugruppe nach Anspruch 4, **dadurch gekennzeichnet, dass** ein Getriebe oder ein Schneckenrad vorgesehen ist, das die Bewegung zwischen dem Antrieb (550) und dem Arm (512) überträgt, insbesondere wobei das Getriebe oder das Schneckenrad am Gurthöhenversteller (504) angebracht ist.

10. Baugruppe nach einem der vorhergehenden Ansprüche, **dadurch gekennzeichnet, dass** der Arm (112 - 512) permanent mit dem Gurtband (110) verbunden ist.

## Claims

1. An assembly comprising a belt height adjuster (104 - 504) and a belt feeder for feeding a belt webbing (110),
wherein the belt height adjuster includes a longitudinally movable slide and reverse fittings (106) fastened thereto, and
wherein the belt feeder includes an arm (112 - 512) which is movable, especially pivoting, by means of a drive (250 - 550) from a normal position to a feeding position and the arm (112 - 512) is arranged on the belt height adjuster (104 - 504).

2. The assembly according to claim 1, **characterized in that** the arm (112 - 512) is fastened to a pivot point (108) of the reverse fittings (106).

3. The assembly according to any one of the preceding claims, **characterized in that** the drive (350; 450; 550) for moving the arm (112 - 512) is arranged on the belt height adjuster (104 - 504).

4. The assembly according to any one of the preceding claims, **characterized in that** at least one force transmission member (116; 120; 216; 316), especially a force transmission member exhibiting tensile stiffness or compression stiffness (116; 120; 216; 316), is provided for transmitting the movement from the drive (250 - 550) to the arm (112 - 512).

5. The assembly according to claim 4, **characterized in that** the force transmission member (116; 120; 216; 316) is disposed at the belt height adjuster (104 - 504).

6. The assembly according to any one of the claims 4 and 5, **characterized in that** the force transmission member (116; 120; 216; 316) is a Bowden cable, a tie rod or a coupling rod.

7. The assembly according to claim 6, **characterized in that** a spindle drive (250) is provided for moving the tension transmission member.

8. The assembly according to claim 6, **characterized in that** the coupling rod is connected to an eccentric (462) arranged on the belt height adjuster (404).

9. The assembly according to claim 4, **characterized in that** a gearing or a worm gear is provided for transmitting the movement between the drive (550) and the arm (512), especially wherein the gearing or the worm gear is disposed at the belt height adjuster (504).

10. The assembly according to any one of the preceding claims, **characterized in that** the arm (112 - 512) is permanently connected to the belt webbing (110).

## Revendications

1. Assemblage avec un dispositif de réglage en hauteur de ceinture (104-504) et un approche-ceinture de sécurité pour amener une ceinture de sécurité (110)
pour lequel le dispositif de réglage de hauteur de ceinture comporte un chariot mobile longitudinalement et une ferrure de renvoi (106) attaché à celui-ci, et
dans lequel la ceinture de sécurité comprend un bras (112 - 512) qui, au moyen d'un entraînement (250 - 550) peut être déplacé d'une position normale à une position d'amenée, en particulier par pivotement, et où le bras (112 à 512) est disposé sur le dispositif de réglage de hauteur de ceinture (104 504).

2. Assemblage selon la revendication 1, **caractérisé en ce que** le bras (112 à 512) est fixé à un point de pivotement (108) de la ferrure de renvoi (106).

3. Assemblage selon l'une des revendications précédentes, **caractérisé en ce que** l'entraînement (350; 450; 550) pour le mouvement du bras (112 à 512) est disposé sur le dispositif de réglage de hauteur de la ceinture (504, 104).

4. Assemblage selon l'une des revendications précédentes, **caractérisé en ce qu'**est prévu au moins un élément de transmission d'effort (116; 120; 216; 316), en particulier un élément de transmission d'effort en traction ou compression (116; 120; 216; 316), lequel transmet le mouvement du moyen d'entraînement (250-550) sur le bras (112-512).

5. Assemblage selon la revendication 4, **caractérisé en ce que** l'élément de transmission d'effort (116; 120; 216; 316) est monté sur le dispositif de réglage de hauteur de ceinture (104-504).

6. Assemblage selon l'une quelconque des revendications 4 et 5, **caractérisé en ce que** l'élément de transmission d'effort (116; 120; 216; 316) est un câble sous gaine, une tige de traction ou une tige de couplage.

7. Assemblage selon la revendication 6, **caractérisé en ce qu'**est prévu un entraînement par broche (250) pour le déplacement de l'élément de transmission d'effort.

8. Assemblage selon la revendication 6, **caractérisé en ce que** la tige d'accouplement est reliée à un excentrique (462), qui est disposé sur le dispositif de réglage de hauteur de ceinture (404).

9. Assemblage selon la revendication 4, **caractérisé en ce qu'**il est prévu un engrenage ou une vis sans fin, qui transmet le mouvement entre le moyen d'entrainement (550) et le bras (512), en particulier dans lequel l'engrenage ou la vis sans fin est monté sur le dispositif de réglage de hauteur de la ceinture (504).

10. Assemblage selon l'une quelconque des revendications précédentes, **caractérisé en ce que** le bras (112 à 512) est relié en permanence à la ceinture (110).
